# EUROPEAN PATENT APPLICATION

(11) **EP 2 565 373 A2**
(43) Date of publication of application: **06.03.2013**
(21) Application number: 12181149.1
(22) Date of filing: 21.08.2012
(51) Int. Cl.: E21B 47/00

(54) **Emergency disconnect sequence video sharing**

(30) Priority: 30.08.2011 US 201113221125
(71) Applicant: Hydril USA Manufacturing LLC, Houston, TX 77032 (US)
(72) Inventor: Ebenezer, Joseph Prem, Houston, TX Texas 77032 (US)
(74) Representative: Illingworth-Law, William Illingworth

(57) **Abstract**

Emergency disconnect sequence (EDS) video sharing systems and method. The EDS video sharing system may include, among other features, a storage to store EDS evidence, and at least a portion of a communication link to transmit said EDS evidence from a drilling platform to a remote computing device during a video sharing session between a rig computing device and the remote computing device.

## Description

### BACKGROUND

### TECHNICAL FIELD

Embodiments of the subject matter disclosed herein generally relate to methods and systems and, more particularly, to mechanisms and techniques for sharing video evidence of the initiation and/or progress of an emergency disconnect sequence (EDS).

### DISCUSSION OF THE BACKGROUND

During the past years, with the increase in price of fossil fuels, the interest in developing new production fields has increased dramatically. However, the availability of land-based production fields is limited. Thus, the industry has now extended drilling to offshore locations, which appear to hold a vast amount of fossil fuel.

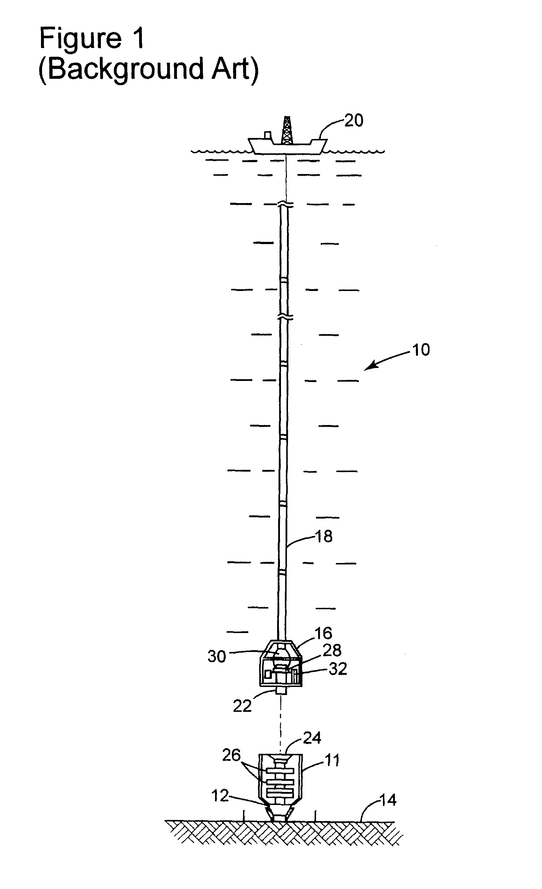

The existing technologies for extracting the fossil fuel from offshore fields may use a system 10 as shown in Figure 1. More specifically, a blowout preventer stack ("BOP stack") 11 may be rigidly attached to a wellhead 12 upon the sea floor 14, while a Lower Marine Riser Package ("LMRP") 16 may be retrievably disposed upon a distal end of a marine riser 18, extending from a drill ship 20 or any other type of surface drilling platform or vessel. As such, the LMRP 16 may include a stinger 22 at its distal end configured to engage a receptacle 24 located on a proximal end of the BOP stack 11.

In typical configurations, the BOP stack 11 may be rigidly affixed atop the subsea wellhead 12 and may include (among other devices) a plurality of ram-type blowout preventers 26 useful in controlling the well as it is drilled and completed. Similarly, the LMRP 16 may be disposed upon a distal end of a long flexible riser 18 that provides a conduit through which drilling tools and fluids may be deployed to and retrieved from the subsea wellbore. Ordinarily, the LMRP 16 may include (among other things) one or more ram-type BOPs 28 at its distal end, an annular blowout preventer 30 at its upper end, and multiplex (MUX) pods 32.

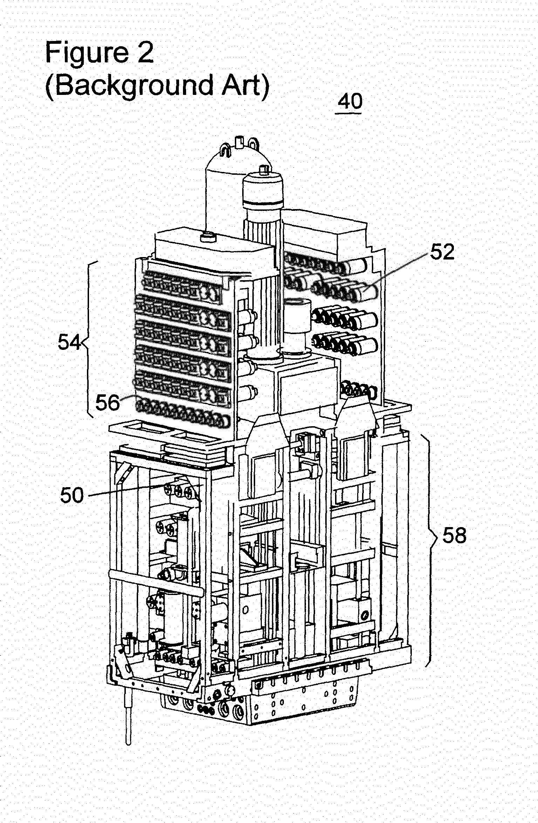

A MUX pod system 40, is shown in Figure 2 and may provide between 50 and 100 different functions to the BOP stack and/or the LMRP and these functions may be initiated and/or controlled from or via the MUX BOP Control System.

The MUX pod 40 may be fixedly attached to a frame (not shown) of the LMRP and may include hydraulically activated valves 50 (called in the art sub plate mounted ("SPM") valves) and solenoid valves 52 that are fluidly connected to the hydraulically activated valves 50. The solenoid valves 52 are provided in an electronic section 54 and are designed to be actuated by sending an electrical signal from an electronic control board (not shown). Each solenoid valve 52 may be configured to activate a corresponding hydraulically activated valve 50. The MUX pod 40 may include pressure sensors 56 also mounted in the electronic section 54. The hydraulically activated valves 50 are provided in a hydraulic section 58 and may be fixedly attached to the MUX pod 40.

A bridge between the LMRP 16 and the BOP stack 11 is formed that matches the multiple functions from the LMRP 16 to the BOP stack 11, e.g., fluidly connects the SPM valves 50 from the MUX pod provided on the LMRP to dedicated components on the BOP stack or the LMRP. The MUX pod system is used in addition to choke and kill line connections (not shown) or lines that ensure pressure supply for the shearing function of the BOPs.

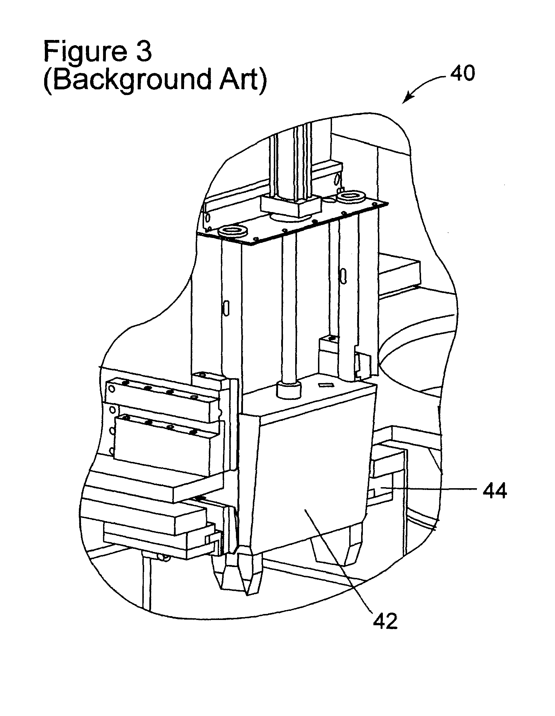

The bridge is shown in Figure 3 and may include a pod wedge 42 configured to engage a receiver 44 on the BOP stack. The pod wedge 42 has plural holes (not shown), depending on the number of functions provided, that provides hydraulic fluids from the LMRP 16 to the BOP stack 11.

In typical subsea BOP installations, multiplex ("MUX") cables (electrical) and/or lines (hydraulic) transport control signals (via the MUX pod and the pod wedge) to the LMRP 16 and BOP stack 11 devices so the specified tasks may be controlled from the surface. Once the control signals are received, subsea control valves are actuated and (in most cases) high-pressure hydraulic lines are directed to perform the specified tasks. Thus, a multiplexed electrical or hydraulic signal may operate a plurality of "low pressure" valves to actuate larger valves to communicate the high-pressure hydraulic lines with the various operating devices of the wellhead stack.

Examples of communication lines bridged between LMRPs and BOP stacks through feed-thru components include, but are not limited to, hydraulic choke lines, hydraulic kill lines, hydraulic multiplex control lines, electrical multiplex control lines, electrical power lines, hydraulic power lines, mechanical power lines, mechanical control lines, electrical control lines, and sensor lines. In certain embodiments, subsea wellhead stack feed-thru components include at least one MUX "pod" connection whereby a plurality of hydraulic control signals are grouped together and transmitted between the LMRP 16 and the BOP stack 11 in a single mono-block feed-thru component as shown, for example, in Figure 3.

When desired, ram-type BOPs of the LMRP 16 and the BOP stack 11 may be closed and the LMRP 16 may be detached from the BOP stack 11 and retrieved to the surface, leaving the BOP stack 11 atop the wellhead. For example, it may be necessary to retrieve the LMRP 16 from the wellhead stack in times of inclement weather or when work on a particular wellhead is to be temporarily stopped.

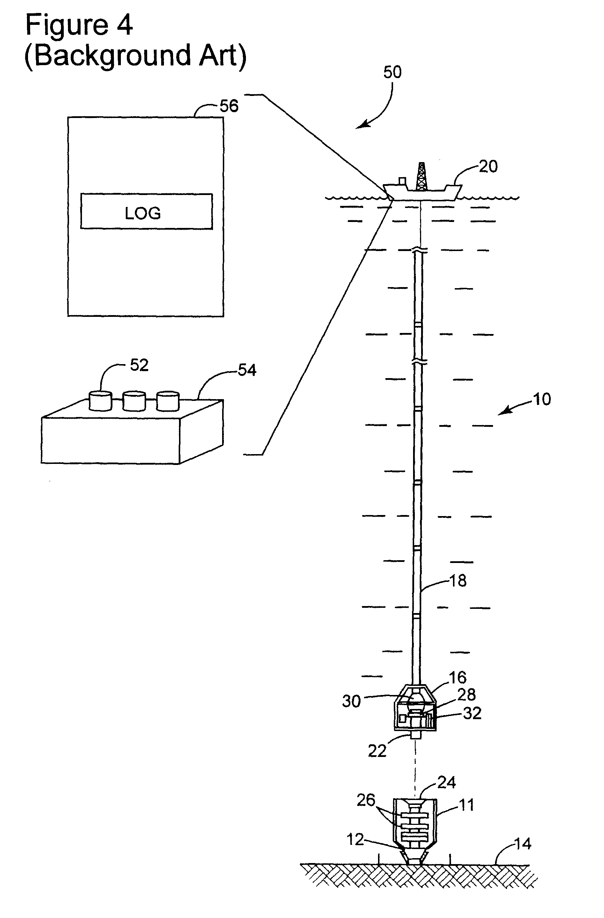

To retrieve the LMRP 16 from the wellhead stack, an EDS may be initiated. An EDS may include a number of different functions that are to be performed by the LMRP 16 and the BOP stack. The functions of the EDS may be carried out by the LMRP 16 and/or the BOP stack as set forth above via the MUX pod 40 and/or the bridge. A particular EDS may include a predetermined number of functions. For example, one particular EDS may include eighteen (18) functions while another EDS may include twenty-five (25) functions. A particular EDS may take a predetermined period of time to complete. For example, one particular EDS may take 20 (twenty) seconds to complete while another EDS may take 25 (twenty-five) seconds to complete. An EDS may be initiated using an EDS system 50 as shown in Figure 4. An EDS may be initiated or fired by pressing an EDS button 52 located on a stack controller 54 located on the drill ship 20. Once the EDS is fired, the functions included in that EDS may be performed until all of the functions are complete.

Verification that an operator initiated an EDS and/or review of the progression of the EDS may be desired. Conventionally, such verification or review may be provided via a manual log 56. When an operator selects or presses the EDS button 52 located on the stack controller 54, the log 56 may be updated to reflect the initiation of the EDS. Similarly, the progress of the EDS may be recorded in the manual log 56. However, this conventional approach is problematic. For example, the accuracy of such a log may itself be in question and may need verification. Beyond the log, conventional systems may not include any additional tools to verify that the operator initiated the EDS, or to review the progression of the EDS. Finally, review of a log by certain persons may be difficult. For example, engineers, field service engineers, and other persons not located on the drill ship with the log may not be able to easily review the log.

Therefore, it is desired to provide a novel approach for sharing evidence of the initiation and/or progression of an EDS.

### SUMMARY

According to one exemplary embodiment, there is an EDS video sharing system. The EDS video sharing system includes a stack screen on a drilling platform, the stack screen including an EDS button to initiate an emergency disconnect sequence signal to be sent to a multiplex pod resulting in an EDS including a plurality of functions being performed by devices in one or both of a LMRP and a BOP stack, and an EDS function status indicator, either a video capture device aimed at the stack screen to automatically capture one or more of the initiation of the EDS signal by the EDS button and a progress of the EDS indicated by the EDS function status indicator as EDS evidence, or a video card to capture video captures of one or more of the initiation of the EDS signal by the EDS button and a progress of the EDS indicated by the EDS function status indicator as emergency disconnect sequence evidence, a storage connected to either the video capture device or the video card and configured to store said EDS evidence; and at least a portion of a communication link to transmit said EDS evidence from the drilling platform to a remote computing device during a video sharing session between a rig computing device and the remote computing device.

According to another exemplary embodiment, there is an EDS system. The system includes a BOP stack, a LMRP releasably connectable to the BOP stack, a multiplex pod connected to the LMRP, the multiplex pods to receive an EDS signal and to transport electric and/or hydraulic control signals to devices in one or both of the LMRP and the BOP stack in response to the EDS signal, a marine riser connected to the LMRP, a drilling platform connected to the marine riser, and a stack screen on the drilling platform, the stack screen including an EDS button to initiate the EDS signal sent to the multiplex pods resulting in an EDS including a plurality of functions being performed by the devices in the one or both of the LMRP and the BOP stack, and an EDS function status indicator, either a video capture device aimed at the stack screen to automatically capture one or more of the initiation of the EDS signal by the EDS button and a progress of the EDS indicated by the EDS function status indicator as EDS evidence, or a video card to capture videos of one or more of the initiation of the EDS signal by the EDS button and a progress of the EDS indicated by the EDS function status indicator as EDS evidence, a storage to store said EDS evidence, at least a portion of a communication link to transmit said EDS evidence from the drilling platform to a remote computing device during a video sharing session between a rig computing device and the remote computing device.

According to another exemplary embodiment, there is a method to share EDS evidence. The method includes receiving, into a rig computing device, a video image from either a video capture device aimed at a stack screen interface or from a video card, the video image including one or both of an initiation of an EDS by an operator touching an EDS button on the stack screen interface, and a progress of the EDS indicated by an EDS function status indicator, storing, in a storage in communication with the rig computing device, the video image from the video capture device or the video card as the EDS evidence, transmitting, via a communication link between the rig computing device and a remote computing device, the EDS evidence to the remote computing device.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic diagram of a conventional offshore rig;
Figure 2 is a schematic diagram of a MUX pod;
Figure 3 is a schematic diagram of a feed-thru connection of a MUX pod attached to a subsea structure;
Figure 4 is a schematic diagram of a conventional EDS system;
Figure 5 is a schematic diagram of an EDS system according to an exemplary embodiment;
Figure 6 is a schematic diagram of an EDS system according to another exemplary embodiment;
Figure 7 is a schematic diagram of an EDS system according to another exemplary embodiment;
Figure 8 is a schematic diagram of an EDS system architecture according to an exemplary embodiment;
Figure 9 is a schematic diagram of an EDS system architecture according to another exemplary embodiment;
Figures 10 and 11 are schematic diagrams of EDS evidence according to an exemplary embodiment.
Figure 12 is a flow chart of a method according to an exemplary embodiment.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity; with regard to the terminology and structure of an EDS system provided with a stack screen for initiating an EDS and/or monitoring the status of that EDS. However, the embodiments to be discussed next are not limited to these systems, but may be applied to other systems (e.g., diverter systems) that may include other interfaces (e.g., alarms screen, diverter screen, events screen, utility screen) for initiating and/or monitoring the status of other sequences (e.g., well shut-in sequences, diverter sequences, specialized sequences including external pod functions).

Reference throughout the specification to "an exemplary embodiment" or "another exemplary embodiment" means that a particular feature, structure, or characteristic described in connection with an embodiment is included in at least one embodiment of the subject matter disclosed. Thus, the appearance of the phrases "in an exemplary embodiment" or "in another exemplary embodiment" in various places throughout the specification is not necessarily referring to the same embodiment. Further, the particular features, structures or characteristics may be combined in any suitable manner in one or more embodiments. It will be understood that when an element is referred to as being, for example, "in communication with" another element, it can be directly in communication with the other element or intervening elements may also be present. No element, act, or instruction used in the description of the present application should be construed as critical or essential to the invention unless explicitly described as such. Also, as used herein, the article "a" is intended to include one or more items. For example, references to a "network" may be to one network or a series of networks.

According to an exemplary embodiment, a video capture device may be aimed at a stack screen on a rig to automatically capture an initiation of an EDS signal by an EDS button and/or a progress of the EDS indicated by an EDS function status indicator as EDS evidence. The EDS evidence may be stored with a timestamp and shared over a network such as the internet. In this way, that an operator initiated a particular EDS and/or the progression of the EDS may be shared with, for example, engineers, field service engineers, and other persons not located on the rig.

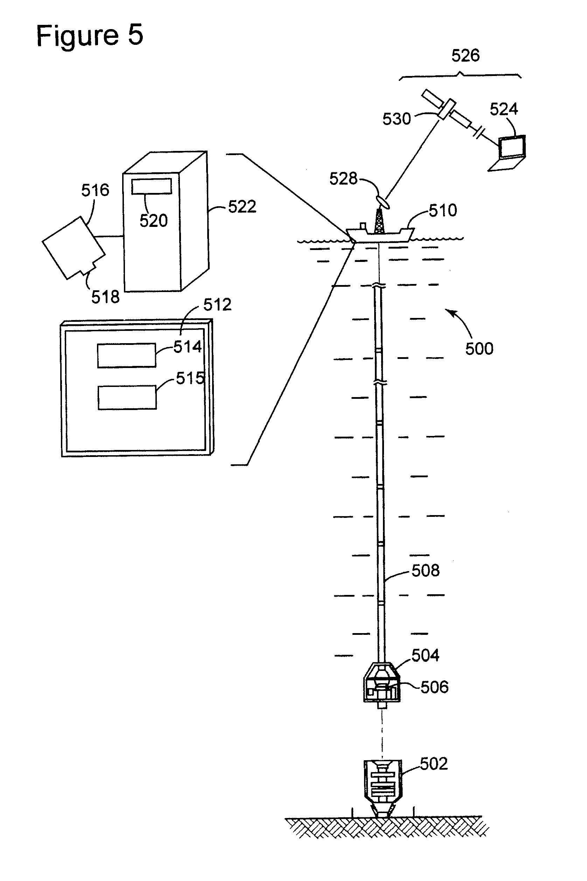

According to an exemplary embodiment shown in Figure 5, an EDS system 500 may include a BOP stack 502, a LMRP 504, MUX pods 506, a marine riser 508, a drilling platform 510, a stack screen 512, a video capture device 516, a rig computing device 522, a remote computing device 524, and a communication link 526. The LMRP 504 may be releasably connectable to the BOP stack 502. The MUX pods 506 may be connected to the LMRP 504. The marine riser 508 may be connected to the LMRP 504. The drilling platform 510 may be connected to the marine riser 508. The stack screen 512, video capture device 516, and the rig computing device 522 may be located on the drilling platform 510. As discussed in more detail herein, the remote computing device 524 may be located remote from the drilling platform 510, and may be in communication with the rig computing device 522 via the communication link 526. For example, the remote computing device 524 may be located on shore at a location used by engineers in connection with trouble shooting, or at a location used by field service engineers for training.

The MUX pods 506 may receive an EDS signal and may transport electric and/or hydraulic control signals to devices in the LMRP 504 and/or the BOP stack 502 in response to the EDS signal.

The stack screen 512 may include a number of different controls and displays including an EDS button 514 and an EDS function status indicator 515. The EDS button 514 may initiate the EDS signal sent to the MUX pod and may result in an EDS including a plurality of functions being performed by the devices in the LMRP 504 and/or the BOP stack 502. The EDS may include a predetermined number of functions as the plurality of functions and may last for a predetermined period of time. Each function may last a corresponding amount of time. The EDS function status indicator 515 may indicate a status (e.g., complete) of a function of the plurality of functions. In an exemplary embodiment, the EDS button 514 and the EDS function status indicator 515 are two separate elements on the stack screen 512. In another exemplary embodiment, the EDS button 514 and the EDS function status indicator 515 may be the same element.

In an exemplary embodiment, the stack screen 512 may be a touch-screen. The stack screen 512 may include the EDS button 514 and the EDS function status indicator 515 as touch-screen displays. In another exemplary embodiment, the stack screen may be a computer display. The stack screen may include the EDS button as a selectable control on the computer display and the EDS function status indicator as a display on the computer display. In another exemplary embodiment, the stack screen may be a physical control panel. The stack screen may include the EDS button as a physical button and the EDS function status indicator as a display.

The video capture device 516 may be aimed at the stack screen 512 to capture the initiation of the EDS signal by the EDS button and/or a progress of the EDS as indicated by the EDS function status indicator as EDS evidence. The rig computing device 522 may include a storage 520. The storage 520 may store the EDS evidence. Accordingly, the rig computing device 522 may constitute a "data logger". In another exemplary embodiment, the rig computing device 522 may be in communication with a remote storage. In such an embodiment, the remote storage may constitute the "data logger." In either embodiment, other rig computing devices may be in communication with the data logger.

The video capture device 516 may be a digital video capture device. The rig computing device 522 may include software including video capture and playback capabilities, such as the QNX operating system by QNX Software Systems Co. The rig computing device 522 may be in communication with and drive the video capture device 516. The video capture device 516 may include a video capture device lens 518. The video capture device lens 518 may be aimed at the stack screen 512. As such, the video capture device 516 may capture the initiation of the EDS signal by the EDS button and/or the progress of the EDS as indicated by the EDS function status indicator as an EDS video. The storage 520 may store the EDS video as a digital video file. The digital video file may be compressed when it is stored.

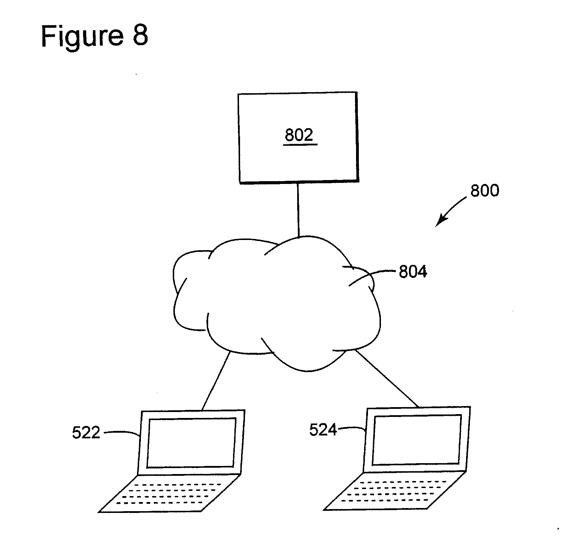

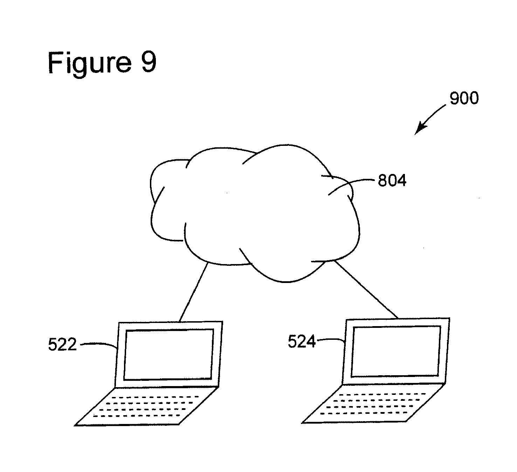

The rig computing device 522 may include software including video sharing capabilities, such as software used by the Cisco WebEx Meeting Center service by Cisco WebEx LLC or the GoToMeeting service by Citrix Online, LLC. The remote computing device 524 may also include software including video sharing capabilities. As noted above, the rig computing device 522 may be in communication with the remote computing device 524 via the communication link 526. As such, the rig computing device 522 may communicate or share the digital video file to the remote computing device 524. The software including video sharing capabilities is discussed in more detail with reference to the exemplary EDS system architectures of Figures 8 and 9.

The communication link 526 may be a high speed and reliable communications path. As shown in Figure 5, the communication link 526 may include a satellite dish 528 on the drilling platform 510 in communication with a satellite 530. The satellite 530 may be in communication ultimately with the remote computing device 524. For example, as shown in Figure 5, the satellite 530 may be in communication with a ground station (not shown) which may be in communication with a network (e.g., the Internet) and ultimately the remote computing device 524.

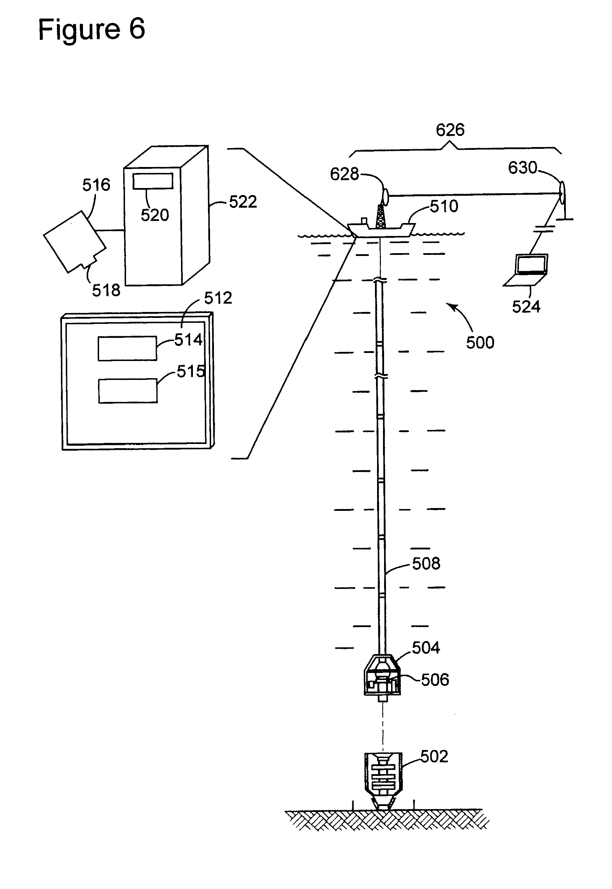

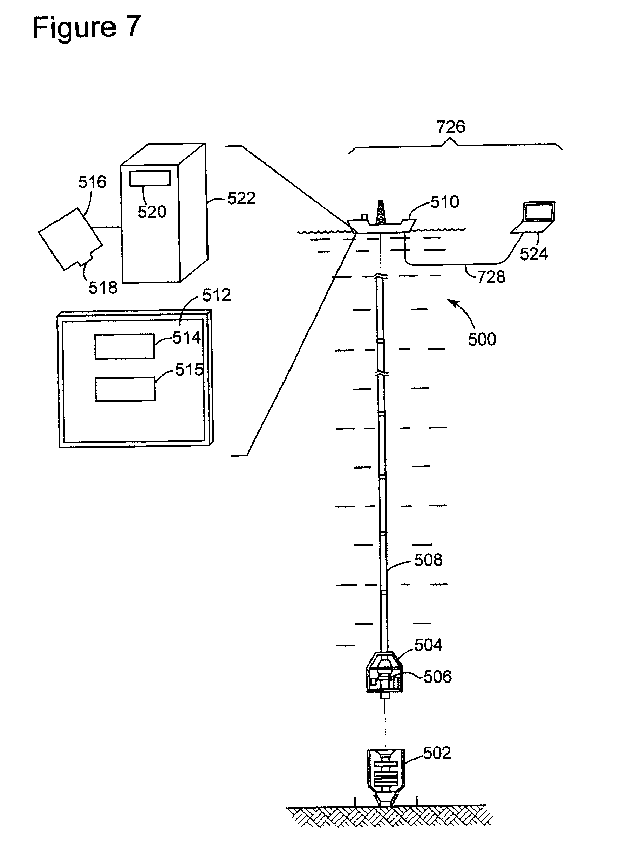

In other exemplary embodiments, a communication link may include additional or alternative communication technologies. For example, as shown in Figure 6, a communications link 626 may include point to point technology, such as a rig microwave antenna 628 aimed either directly or through relays at a remote microwave antenna 630. Accordingly, the rig antenna 628 may be in communication with the remote microwave antenna 630. The remote microwave antenna 630 may be in communication ultimately with the remote computing device 524. For example, as shown in Figure 6, the remote microwave antenna 630 may be in communication with a network (e.g., the Internet) and ultimately the remote computing device 524. As shown in Figure 7, a communications link 726 may include wired technology, for example, an underwater cable 728 in communication ultimately with the remote computing device 524. For example, as shown in Figure 7, the underwater cable 728 may be in communication with a network (e.g., the Internet) and ultimately the remote computing device. In other exemplary embodiments, the communication link may include additional or alternative communication technologies, such as radio frequency links, VOIP (Voice-Over-Internet Protocol) with audio and video features, mobile wireless transmitter services with repeaters, etc.

Figure 8 is a schematic diagram of an EDS system architecture 800 according to an exemplary embodiment. The EDS system architecture 800 is greatly simplified and shows only a selection of elements helpful to understand video sharing. The EDS system architecture 800 may include the rig computing device 522 and the remote computing device 524. The EDS system architecture 800 may further include a video sharing service computing device 802. An exemplary video sharing service is the video sharing service of the Cisco WebEx Meeting Center service. As noted above, the rig computing device 522 and the remote computing device 524 may both include software with video sharing capabilities. More specifically, the rig computing device 522 may include software to transmit the digital video file over a network (including, for example, the Internet 804), and the remote computing device 524 may include software to receive the digital video file from the network. The rig computing device 522 may communicate a video sharing session initiate message to the video sharing service computing device 802 through the network. The remote computing device 524 may communicate a video sharing session initiate message to the video sharing service computing device 802 through the network. The video sharing service computing device 802 may configure a video sharing session between the rig computing device 522 and the remote computing device 524. During the video sharing session, data packets including the digital video file may be transmitted from the rig computing device 522 to the remote computing device 524 over the network. It should be noted again that the article "a" is intended to include one or more items. Accordingly, although only one remote computing device 524 is shown, a digital video file may be communicated to multiple remote computing devices in this and other embodiments.

Figure 9 is a schematic diagram of an EDS system architecture 900 according to an exemplary embodiment. The EDS system architecture 900 is greatly simplified and shows only a selection of elements helpful to understand video sharing. The EDS system architecture 900 may include the rig computing device 522 and the remote commuting device 524. In this exemplary embodiment, the rig computing device 522 may include software including video capabilities. The remote computing device 524 may communicate with the rig computing device 522 through a network (including, for example, the Internet 804). The rig computing device 522 software including video capabilities may transmit data packets including the digital video file to the remote computing device 524 over the network. The remote computing device may view the digital video file using software such as an Internet browser application.

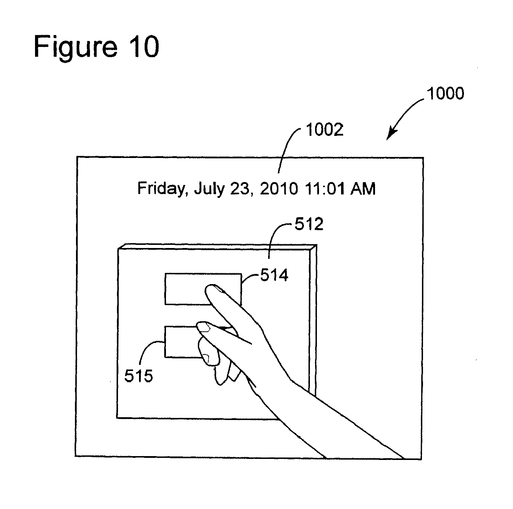

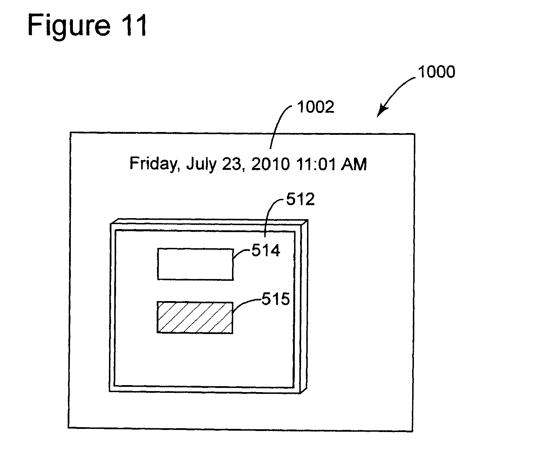

Turning now to the contents of the video, the digital video file may constitute EDS evidence that may be viewed on the remote computing device 524. According to an exemplary embodiment shown in Figures 10 and 11, EDS evidence 1000 may be captured by the video capture device 516 as an EDS video, transmitted to, and viewed using the remote computing device 524. The EDS video may include a timestamp 1002 indicating the time and date of the EDS video. In one application, the time stamp may be as accurate as desired, e.g., to the second. In Figure 10, the EDS video shows an operator's finger initiating an EDS by touching the EDS button 514. Thus, the time when the operator has initiated the EDS sequence may be recorded and observed using the remote computing device 524. Other actions of the operator may also be recorded and remotely viewed. In Figure 11, the EDS video shows a progress of the EDS as indicated by the EDS function status indicator 515. In an exemplary embodiment, the EDS function status indicator 515 may indicate the status of a function by changing color. In another exemplary embodiment, the EDS function status indicator 515 may indicate the status of a function using other function status indicators. Thus, this system may be able to record each function that is being activated by the operator and also the time progression of each function and remotely viewed. In one embodiment, any action of the operator on the stack screen may be recorded with the associated timestamp and remotely viewed.

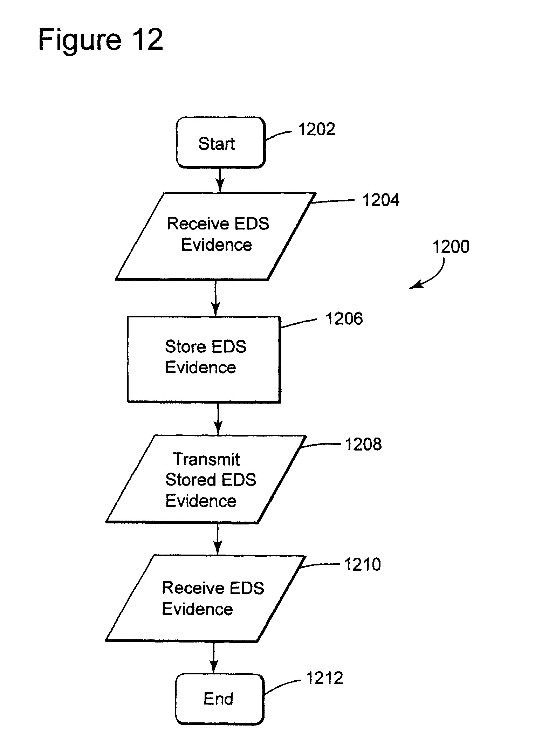

An exemplary operation of the EDS system 500 of Figures 5, 8, and 10-12 is now described with reference to Figure12, which is a flow chart of a method 1200 according to an exemplary embodiment.

In operation 1202, the method may begin. Before initiation of an EDS, the video capture device 516 may be initiated. In an exemplary embodiment, the software including video capture and playback capabilities of the rig computing device 522 may initialize the video capture device 516. The video capture device lens 518 may be aimed at the stack screen 512. The video capture device 516 may then capture a video image of an initiation of an EDS by an operator touching the EDS button 514 (Figure 10). Additionally and/or alternatively, the video capture device may capture a progress of the EDS as indicated by the EDS function status indicator 515 (Figure 11).

In operation 1204, the rig computing device 522 may receive the video image of the initiation of the EDS by the operator touching the EDS button 514 and/or the progress of the EDS as indicated by the EDS function indicator 515 (i.e., the EDS evidence). In operation 1206, the rig computing device 522 may store the EDS evidence in the storage 520. In an exemplary embodiment, the rig computing device 522 provides the timestamp 1002 that is added to the video image. In another exemplary embodiment, the video capture device 516 provides the timestamp 1002 that is part of the video image. The EDS evidence may be compressed.

In operation 1208, the rig computing device transmits the EDS evidence to the remote computing device 524. The rig computing device 522 may communicate a video sharing session initiate message to the video sharing service computing device 802 through the network. The remote computing device 524 may communicate a video sharing session initiate message to the video sharing service computing device 802 through the network. The video sharing service computing device 802 may configure a video sharing session between the rig computing device 522 and the remote computing device 524.

In operation 1210, the remote computing device 524 receives (and displays) the EDS evidence. The receiving of the EDS evidence may be during the video sharing session. In operation 1212, the operation ends. The video sharing session may end. In this way, a time-stamped video of the entire EDS as it is happening on the stack screen 512 may be remotely viewed. The video may serve as a time-stamped record of the initiation of an EDS and/or which functions were fired and when they were fired at any particular time instant. The EDS evidence may be accessed via the remote computing device 524 by, for example, engineers, field service engineers, and other personnel not located on the drilling platform.

In another exemplary embodiment, the video sharing feature may be employed to share videos of functions to be fired during different types of well control situations that may not require the EDS. This may be effectively used as a training tool for field service engineers and other personnel.

In another exemplary embodiment, the video share feature can be employed to share videos of sequences in other devices like Diverter systems for Diverter Packer Close sequences, adjusting regulators, setting up the MUX BOP Control System for normal drilling operations etc.

In another exemplary embodiment, the video capture device may be replaced by and/or include a microphone positioned near the stack screen. The microphone may capture the initiation of the EDS signal by the EDS button and/or the progress of the EDS as indicated by the EDS function status indicator as EDS audio. For example, the EDS button may be configured to cause an audible sound upon selection by an operator. Audible sounds may indicate progress points of the EDS. The EDS audio may be similarly shared to a remote computing device.

The disclosed exemplary embodiments provide EDS systems and a method for sharing video evidence of the initiation and/or progress of an EDS. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Systems and methods for processing data according to exemplary embodiments of the present invention may be performed by one or more processors executing sequences of instructions contained in a memory device. Such instructions may be read into the memory device from other computer-readable mediums such as secondary data storage device(s). Execution of the sequences of instructions contained in the memory devices may cause the processor to operate, for example, as described above. In alternative embodiments, hard-wire circuitry may be used in place of or in combination with software instructions to implement the present invention.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

Various aspects and embodiments of the present invention are defined by the following numbered clauses:
1. An EDS video sharing system comprising:
   a stack screen on a drilling platform, the stack screen including an EDS button to initiate an EDS signal to be sent to multiplex pods resulting in an EDS including a plurality of functions being performed by devices in one or both of a LMRP and a BOP stack, and an EDS function status indicator;
   either a video capture device aimed at the stack screen to automatically capture one or more of the initiation of the EDS signal by the EDS button and a progress of the EDS indicated by the EDS function status indicator as EDS evidence, or a video card to capture video captures of one or more of the initiation of the EDS signal by the EDS button and a progress of the EDS indicated by the EDS function status indicator as EDS evidence;
   a storage connected to either the video capture device or the video card and configured to store said EDS evidence; and
   at least a portion of a communication link to transmit said EDS evidence from the drilling platform to a remote computing device during a video sharing session between a rig computing device and the remote computing device.
2. The EDS video sharing system of clause 1, wherein the storage is part of the rig computing device.
3. The emergency disconnect sequence video sharing system of clause 1 or clause 2,
   wherein the communication link includes a satellite dish.
4. The EDS video sharing system of any preceding clause, wherein the communication link includes a point to point transmitter.
5. The EDS video sharing system of any preceding clause, wherein the point to point transmitter includes a microwave antenna.
6. The EDS video sharing system of any preceding clause, wherein the communication link includes a radio frequency transmitter.
7. The EDS video sharing system of any preceding clause, wherein the emergency disconnect sequence evidence is a compressed digital file.
8. An EDS system, the system comprising:
   a BOP stack;
   a LMRP releasably connectable to the blowout preventer stack;
   a multiplex pod connected to the LMRP, the multiplex pods to receive an EDS signal and to transport electric and/or hydraulic control signals to devices in one or both of the LMRP and the BOP stack in response to the EDS signal;
   a marine riser connected to the LMRP;
   a drilling platform connected to the marine riser; and
   a stack screen on the drilling platform, the stack screen including an EDS button to initiate the EDS signal sent to the multiplex pod resulting in an EDS including a plurality of functions being performed by the devices in the one or both of the LMRP and the BOP stack, and an EDS function status indicator;
   either a video capture device aimed at the stack screen to automatically capture one or more of the initiation of the EDS signal by the EDS button and a progress of the EDS indicated by the EDS function status indicator as EDS evidence, or a video card to capture videos of one or more of the initiation of the EDS signal by the EDS button and a progress of the EDS indicated by the EDS function status indicator as EDS evidence;
   a storage connected to either the video capture device or the video card and configured to store said EDS evidence; and
   at least a portion of a communication link to transmit said EDS evidence from the drilling platform to a remote computing device during a video sharing session between a rig computing device and the remote computing device.
9. The EDS system of any preceding clause, wherein the storage is part of the rig computing device.
10. The EDS system of any preceding clause, wherein the communication link includes a satellite dish.
11. The EDS system of any preceding clause, wherein the communication link includes a point to point transmitter.
12. The EDS system of any preceding clause, wherein the point to point transmitter includes a microwave antenna.
13. The EDS system of any preceding clause, wherein the communication link includes a radio frequency transmitter.
14. The EDS system of any preceding clause, wherein the communication link includes a Voice-Over-Internet Protocol (VOIP) channel with audio and video features.
15. The EDS system of any preceding clause, wherein the communication link includes a mobile transmitter service channel with several repeaters.
16. The EDS system of any preceding clause, wherein the EDS evidence is a compressed digital file.
17. A method to share EDS evidence, comprising:
   receiving, into a rig computing device, a video image from either a video capture device aimed at a stack screen interface or from a video card, the video image including one or both of an initiation of an EDS by an operator touching an EDS button on the stack screen interface, and a progress of the EDS indicated by an EDS function status indicator;
   storing, in a storage in communication with the rig computing device, the video image from the video capture device or the video card as the EDS evidence; and
   transmitting, via a communication link between the rig computing device and a remote computing device, the EDS evidence to the remote computing device.
18. The method to share EDS evidence of any preceding clause, further comprising compressing the video image from the video capture device or the video card.
19. The method to share EDS evidence of any preceding clause, wherein the storing operation comprises storing the EDS evidence in the storage in the computing device.
20. The method to share emergency disconnect sequence evidence of any preceding clause, wherein the transmitting comprises:
   initiating a video sharing session between the rig computing device and the remote computing device; and
   transmitting the EDS evidence from the rig computing device to the remote computing device via the Internet during the video sharing session.
21. The method to share EDS evidence of any preceding clause, wherein the initiating of a video sharing session includes sending data to a video sharing service computing device.
22. The method to capture EDS evidence of any preceding clause, wherein the receiving operation comprises receiving the video image from a digital video capture device, and wherein the storing operation comprises storing the EDS evidence as a digital video file.

## Claims

1. An EDS video sharing system comprising:
a stack screen on a drilling platform, the stack screen including an EDS button to initiate an EDS signal to be sent to multiplex pods resulting in an EDS including a plurality of functions being performed by devices in one or both of a LMRP and a BOP stack, and an EDS function status indicator;
either a video capture device aimed at the stack screen to automatically capture one or more of the initiation of the EDS signal by the EDS button and a progress of the EDS indicated by the EDS function status indicator as EDS evidence, or a video card to capture video captures of one or more of the initiation of the EDS signal by the EDS button and a progress of the EDS indicated by the EDS function status indicator as EDS evidence;
a storage connected to either the video capture device or the video card and configured to store said EDS evidence; and
at least a portion of a communication link to transmit said EDS evidence from the drilling platform to a remote computing device during a video sharing session between a rig computing device and the remote computing device.

2. The EDS video sharing system of claim 1, wherein the storage is part of the rig computing device.

3. The emergency disconnect sequence video sharing system of claim 1 or claim 2,
wherein the communication link includes a satellite dish.

4. The EDS video sharing system of any preceding claim, wherein the communication link includes a point to point transmitter.

5. The EDS video sharing system of any preceding claim, wherein the point to point transmitter includes a microwave antenna.

6. The EDS video sharing system of any preceding claim, wherein the communication link includes a radio frequency transmitter.

7. The EDS video sharing system of any preceding claim, wherein the emergency disconnect sequence evidence is a compressed digital file.

8. An EDS system, the system comprising:
a BOP stack;
a LMRP releasably connectable to the blowout preventer stack;
a multiplex pod connected to the LMRP, the multiplex pods to receive an EDS signal and to transport electric and/or hydraulic control signals to devices in one or both of the LMRP and the BOP stack in response to the EDS signal;
a marine riser connected to the LMRP;
a drilling platform connected to the marine riser; and
an EDS video sharing system according to any preceding claim.

9. The EDS system of any preceding claim, wherein the communication link includes a Voice-Over-Internet Protocol (VOIP) channel with audio and video features.

10. The EDS system of any preceding claim, wherein the communication link includes a mobile transmitter service channel with several repeaters.

11. A method to share EDS evidence, comprising:
receiving, into a rig computing device, a video image from either a video capture device aimed at a stack screen interface or from a video card, the video image including one or both of an initiation of an EDS by an operator touching an EDS button on the stack screen interface, and a progress of the EDS indicated by an EDS function status indicator;
storing, in a storage in communication with the rig computing device, the video image from the video capture device or the video card as the EDS evidence; and
transmitting, via a communication link between the rig computing device and a remote computing device, the EDS evidence to the remote computing device.

12. The method to share EDS evidence of claim 11, further comprising compressing the video image from the video capture device or the video card.

13. The method to share EDS evidence of claim 11 or claim 12, wherein the storing operation comprises storing the EDS evidence in the storage in the computing device.

14. The method to share emergency disconnect sequence evidence of any of claims 11 to 13, wherein the transmitting comprises:
initiating a video sharing session between the rig computing device and the remote computing device; and
transmitting the EDS evidence from the rig computing device to the remote computing device via the Internet during the video sharing session.

15. The method to share EDS evidence of any of claims 11 to 14, wherein the initiating of a video sharing session includes sending data to a video sharing service computing device.
